# EUROPÄISCHE PATENTSCHRIFT

(11) **EP 0 796 192 B1**
(45) Veröffentlichungstag und Bekanntmachung des Hinweises auf die Patenterteilung: **22.07.1998**
(21) Anmeldenummer: 95937781.3
(22) Anmeldetag: 18.11.1995
(51) Int. Cl.: B60T 13/74

(54) **BREMSDRUCKGEBER FÜR EINE HYDRAULISCHE BREMSANLAGE FÜR KRAFTFAHRZEUGE**
BRAKING PRESSURE GENERATOR FOR A HYDRAULIC BRAKING SYSTEM FOR MOTOR VEHICLES
GENERATEUR DE PRESSION POUR SYSTEME DE FREINAGE HYDRAULIQUE D'AUTOMOBILES

(30) Priorität: 20.12.1994 DE 4445347
(43) Veröffentlichungstag der Anmeldung: 24.09.1997
(73) Patentinhaber: ROBERT BOSCH GMBH, 70442 Stuttgart (DE)
(72) Erfinder: SCHLAGMUELLER, Walter, D-71701 Schwieberdingen (DE)
(86) Internationale Anmeldenummer: DE9501610
(87) Internationale Veröffentlichungsnummer: WO9619370

(56) Entgegenhaltungen:
- EP-A- 0 395 225
- EP-A- 0 395 262
- DE-A- 4 229 042
- US-A- 4 812 723

## Beschreibung

### Stand der Technik

Die Erfindung geht aus von einem Bremsdruckgeber nach der Gattung des Patentanspruchs.

Es ist schon ein derartiger Bremsdruckgeber bekannt (DE 42 29 042 A1, Figur 4), bei dem der Druckmittel-Vorratsbehälter auf dem Zylindergehäuse sitzt und durch eine bodenseitige Öffnung mit dem Druckraum in Verbindung steht. Dessen Volumen ist mittels eines auf den Kolben einwirkenden Spindeltriebs konstanter Spindelsteigung veränderbar, wobei der Spindeltrieb von einem Elektromotor über ein Stirnradgetriebe antreibbar ist. Bei nicht aktiviertem Bremsdruckgeber ist es zwingend erforderlich, daß der Kolben mit seiner Dichtungsmanschette die genannte Öffnung freigibt, damit ein Druckmittelausgleich zwischen dem Druckraum und dem Vorratsbehälter stattfinden kann. Dies wiederum hat zur Folge, daß bei einer Bremsbetätigung der Kolben zunächst zum Überfahren der Ausgleichsöffnung einen Leerhub zurücklegen muß, bevor der dem Erzeugen von Bremsdruck dienende Arbeitshub beginnt. Die hierdurch bedingte Ansprechdauer der Bremsanlage wird darüber hinaus noch bestimmt durch die Trägheit des Bremsdruckgeber-Antriebssystems, durch dessen Spiel sowie durch den Lüftweg, den Bremsbeläge beim Anlegen an eine Bremsscheibe überwinden müssen.

Es ist außerdem ein Bremskraftgeber bekannt (DE 27 10 585 B1), bei dem ein elektromotorischer Antrieb über ein Untersetzungsgetriebe auf einen Nockentrieb einwirkt, um einen Federspeicher zu spannen. Das Problem des Druckmittelausgleichs ist hier nicht gegeben.

### Vorteile der Erfindung

Der erfindungsgemäße Bremsdruckgeber mit den kennzeichnenden Merkmalen des Patentanspruchs hat demgegenüber den Vorteil, daß die Ansprechdauer der Bremsanlage erheblich verkürzt ist. Dies ist zum einen durch die Ringspaltform der Verbindung zwischen dem Druckraum und dem Vorratsbehälter erzielt, weil der Ringspalt axial sehr schmal bauend bei ausreichendem Querschnitt ausgebildet sein kann. Zum anderen ist aufgrund der Nockenkontur am Beginn des Kolbenwegs ein größeres Übersetzungsverhältnis des Getriebes für den Kolbenantrieb wirksam, so daß der Ringspalt sehr schnell vom Kolben überfahren wird, während sich im weiteren Verlauf des Kolbenhubs das Übersetzungsverhältnis vermindert, was eine Überlastung des Elektromotors aufgrund der mit dem Hub zunehmenden, auf den Kolben ausgeübten Gegenkräfte verhindert.

Durch die in den Unteransprüchen aufgeführten Maßnahmen sind vorteilhafte Weiterbildungen und Verbesserungen des im Patentanspruch angegebenen Bremsdruckgebers möglich.

So wird durch die auf den Kolben wirkende Druckfeder dessen aus Sicherheitsgründen erforderliche selbsttätige Rückstellung ermöglicht, wenn der Motor nicht mehr bestromt ist. Dies wird durch ein Stirnrädergetriebe hohen Wirkungsgrades begünstigt, wobei ein Planetengetriebe darüber hinaus einen geringen Einbauraum erfordert. Ein hoher Wirkungsgrad des Getriebes wiederum gestattet den Einsatz einer Druckfeder mit verminderter Federrate, was den auf die Überwindung der Druckfeder gerichteten Teil der Motorleistung bei einer Bremsung verringert. Schließlich verhindert die elektromagnetische Bremse eine Momentenbelastung des Motors bei Druckhaltephasen während einer Bremsung.

### Zeichnung

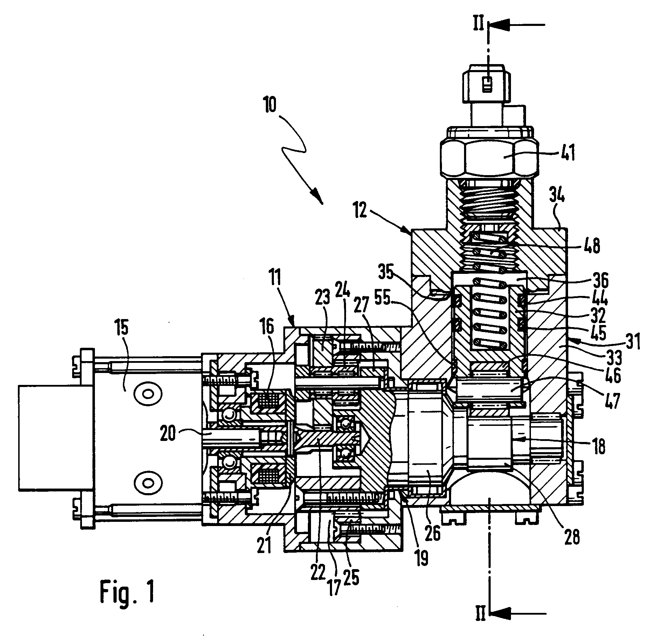

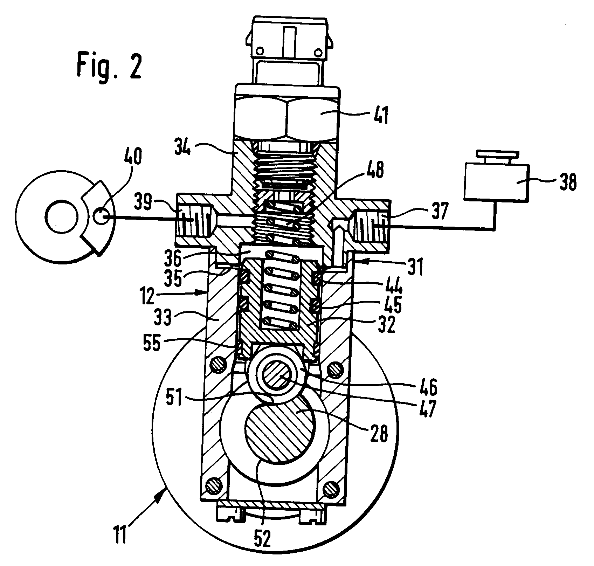

Ein Ausführungsbeispiel der Erfindung ist in der Zeichnung vereinfacht dargestellt und in der nachfolgenden Beschreibung näher erläutert. Es zeigen Figur 1 teilweise im Schnitt einen Bremsdruckgeber mit Elektromotor, elektromagnetischer Bremse, Planetengetriebe mit Nockentrieb sowie einer Kolben-Zylinder-Anordnung und Figur 2 einen Schnitt entlang der Linie II-II in Figur 1 durch den mit einem schematisch angedeuteten Druckmittel-Vorratsbehälter und einem Radbremszylinder einer Bremsanlage verbundenen Bremsdruckgeber.

### Beschreibung des Ausführungsbeispiels

Ein in der Zeichnung dargestellter Bremsdruckgeber 10 ist für eine hydraulische Bremsanlage für Kraftfahrzeuge bestimmt. Der Bremsdruckgeber 10 besteht im wesentlichen aus einer Antriebs-Anordnung 11 und einer Kolben-Zylinder-Anordnung 12 (Figur 1).

Die Antriebs-Anordnung 11 umfaßt einen Elektromotor 15, eine elektromagnetische Bremse 16 und ein von einem Planetengetriebe 17 und einem Nockentrieb 18 gebildeten Untersetzungsgetriebe 19. Die elektromagnetische Bremse 16 ist ausgangsseitig des Elektromotors 15 angeordnet und weist eine mittelbar mit der Ankerwelle 20 des Motors drehfest verbundene Bremsscheibe 21 auf. Auf der Ankerwelle 20 ist ein ritzelförmiges Sonnenrad 22 des zwischen der Bremse 16 und der Kolben-Zylinder-Anordnung 12 eingefügten Planetengetriebes 17 befestigt. Das Sonnenrad 22 kämmt mit einem Planetenrad 23, welches mit einem durchmesserkleineren zweiten Planetenrad 24 verbunden ist. Dieses greift wiederum in ein feststehendes Hohlrad 25 des Planetengetriebes 17 ein. Von diesem geht eine in der Kolben-Zylinder-Anordnung 12 gelagerte Welle 26 aus, die zugleich den die Planetenräder 23 und 24 tragenden Steg 27 des Planetengetriebes 17 bildet. Auf der Seite der Kolben-Zylinder-Anordnung 12 ist die Welle 26 mit dem Nocken 28 des Nockentriebs 18 versehen.

Die Kolben-Zylinder-Anordnung 12 besteht im wesentlichen aus einem zweiteiligen Zylindergehäuse 31 und einem in diesem längsverschiebbar aufgenommenen Kolben 32 (Fig. 1 und 2). Dieser ist im wesentlichen in dem Zylinderteil 33 geführt, in den die Welle 26 mit dem Nocken 28 eingreift. Nockenabgewandt ist auf den ersten Zylinderteil 33 der zweite Zylinderteil 34 des Zylindergehäuses 31 aufgesetzt. Der zweite Zylinderteil 34 greift druckdicht in den ersten Zylinderteil 33 ein, beläßt jedoch innenumfangsseitig einen Ringspalt 35 zu diesem. Der zweite Zylinderteil 34 schließt einen vom Kolben 32 begrenzten druckmittelgefüllten Druckraum 36 ein. Dieser hat in der gezeichneten Stellung des Kolbens 32 eine druckmittelleitende Verbindung mit dem Ringspalt 35. Der Ringspalt 35, welcher druckraumseitig eine sehr geringe axiale Erstreckung aufweist, steht über einen Anschlußstutzen 37 des zweiten Zylinderteils 34 mit einem schematisch angedeuteten Druckmittel-Vorratsbehälter 38 in Verbindung. An den Druckraum 36 ist außerdem über einen zweiten Anschlußstutzen 39 des zweiten Zylinderteils 34 ein ebenfalls schematisch angedeuteter Radbremszylinder 40 angeschlossen. Ferner ist in den zweiten Zylinderteil 34 ein Drucksensor 41 zum Überwachen des mit dem Bremsdruckgeber 10 erzeugten Bremsdrucks eingeschraubt.

Für den druckdichten Abschluß des Druckraums 36 sind am Kolben 32 umfangsseitig zwei Dichtungsmanschetten 44 und 45 für den Angriff an der Zylinderwand aufgenommen. Außerdem ist parallelachsig zur Welle 26 im Kolben 32 eine Rolle 46 auf einem Stift 47 drehbar gelagert. Die Rolle 46 greift an der Nocke 28 unter der Wirkung einer vorgespannten Druckfeder 48 an, welche im Druckraum 36 angeordnet ist und sich einerseits am Kolben 32 sowie andererseits mittelbar am zweiten Zylinderteil 34 abstützt.

Aus Vorstehendem ist erkennbar, daß das Getriebe 19 zum einen die Drehzahl des Elektromotors 15 herabsetzt und zum anderen dessen Drehbewegung in eine Linearbewegung des Kolbens 32 wandelt. Der die Drehbewegung der Welle 26 in die Linearbewegung des Kolbens 32 umsetzende Nocken 28 hat einen spiralförmigen Umriß. Dabei ist der Nocken 28 derart auf den Kolben 32 abgestimmt, daß in der in Figur 2 gezeichneten Ausgangsstellung des Nockens die druckraumseitige Dichtungsmanschette 44 unmittelbar an den Ringspalt 35 angrenzt. Vom gezeichneten Rollenangriff ausgehend weist der Nocken 28 einen sich über einen kleinen Teil der Nockenbahn erstreckenden Bereich 51 auf, welcher eine größere Steigung hat als der folgende, bis zum Nockengipfel reichende Bereich 52. Auf diese Weise ist zumindest am Beginn einer Nockenumdrehung ein nicht lineares Übersetzungsverhältnis des Getriebes 19 verwirklicht. Diese Nichtlinearität kann sich auf den Bahnbereich 51 beschränken; sie kann jedoch auch unter stetiger oder unstetiger Minderung des Übersetzungsverhältnisses bis zum Nockengipfel fortgesetzt sein. Da der Nockentrieb 18 Querkräfte auf den Kolben 32 überträgt, ist dieser im Bereich der Rolle 46 umfangsseitig mit einem reibungsarmen Führungsring 55 zum Ableiten der Querkräfte auf das Zylindergehäuse 31 versehen. Zugleich verhindert der Führungsring 55 eine metallische Berührung des Kolbens 32 am Zylindergehäuse 31.

Der in Figur 2 mit dem Druckmittel-Vorratsbehälter 38 und dem Radbremszylinder 40 ergänzte Bremsdruckgeber 10 verkörpert eine hydraulische Bremsanlage, welche einem Rad eines Kraftfahrzeugs zugeordnet werden kann. Diese Bremsanlage ist nach Maßgabe eines von einem fahrerbetätigten Bremswertgeber (nicht dargestellt) erzeugten elektrischen Bremsanforderungssignals durch Bestromung des Elektromotors 15 aktivierbar. Der vom Elektromotor 15 angetriebene Nocken 28 bewirkt, ausgehend von der in Figur 2 dargestellten Ausgangsstellung, eine Axialverschiebung des Kolbens 32. Aufgrund der Kontur des Bahnbereichs 51 erfolgt die Bewegung des Kolbens 32 beschleunigt, so daß nach sehr kurzer Zeit die Dichtungsmanschette 44 den Ringspalt 35 überwunden und die Verbindung des Druckraumes 36 mit dem Druckmittel-Vorratsbehälter 38 getrennt hat. Im weiteren Verlauf der Nockendrehung wird Druckmittel aus dem Druckraum 36 in den Radbremszylinder 40 verdrängt und in diesem sowie im Druckraum 36 Bremsdruck erzeugt. Der vom Drucksensor 41 sensierte Bremsdruck wird einem gleichfalls nicht dargestellten Steuergerät zugeführt, welches den Elektromotor 15 nach Maßgabe des Bremsanforderungssignals und dem Istwert des Bremsdrucks regelt. Bei großen Drehwinkeln der Ankerwelle 20 wird bei einem eine Nichtlinearität des Übersetzungsverhältnisses des Getriebes 19 bewirkenden Steigungsverlauf des Nockenbereichs 52 eine Überlastung des Elektromotors 15 durch überhöhte Motorströme verhindert. Außerdem wird die Gefahr einer thermischen Zerstörung des Elektromotors 15 dadurch ausgeschlossen, daß bei Bremsungen in Druckhaltephasen die elektromagnetische Bremse 16 aktiviert und die Ankerwelle 20 festgehalten wird. Dabei schaltet das Steuergerät zugleich den Elektromotor 15 stromlos. Wird die Bremsung abgebrochen, so wird auch die elektromagnetische Bremse 16 abgeschaltet. Unter der Wirkung des im Druckraum 36 herrschenden Drucks und der gespannten Druckfeder 48 wird das nicht selbsthemmende Untersetzungsgetriebe 19 ohne Bestromung des Elektromotors 15 in seine Ausgangsstellung zurückgedreht, in welcher der Nocken 28 die in Figur 2 gezeichnete Stellung einnimmt und der Kolben 32 den Ringspalt 35 freigibt.

## Patentansprüche

1. Bremsdruckgeber (10) für eine hydraulische Bremsanlage für Kraftfahrzeuge,
- mit einem Zylindergehäuse (31), in dem ein längsverschiebbarer Kolben (32) mit einer umfangsseitigen Dichtungsmanschette (44) aufgenommen ist,
- mit einem durch Längsverschieben des Kolbens (32) volumenveränderbaren Druckraum (36), der einerseits mit wenigstens einem Radbremszylinder (40) und andererseits mit einem Druckmittel-Vorratsbehälter (38) in flüssigkeitsleitender Verbindung steht, wobei die letztgenannte Verbindung durch Überfahren mit der Dichtungsmanschette (44) vom Druckraum (36) abtrennbar ist,
- mit einem Elektromotor (15) für den Antrieb des Kolbens (32)
- sowie mit einem Getriebe (19) für die Umwandlung der Drehbewegung des Elektromotors (15) in eine Linearbewegung des Kolbens (32),
gekennzeichnet durch die weiteren Merkmale:
- die Verbindung des Druckraums (36) mit dem Druckmittel-Vorratsbehälter (38) ist von einem in der Zylinderwand liegenden Ringspalt (35) gebildet,
- es ist abtriebsseitig des Getriebes (19) ein Nocken (28) vorgesehen, der druckraumabgewandt wenigstens mittelbar am Kolben (32) angreift,
- der Nocken (28) hat im dem Überfahren des Ringspalts (35) dienenden Bahnbereich (51) eine größere Steigung als im folgenden, dem Ausstoßen von Druckmittel in den Radbremszylinder (40) dienenden Bereich.

2. Bremsdruckgeber nach Anspruch 1, dadurch gekennzeichnet, daß der Nocken (28) einen spiralförmigen Umriß hat.

3. Bremsdruckgeber nach Anspruch 1, dadurch gekennzeichnet, daß die Zylinderwand aus zwei Teilen (33, 34) besteht, die unter Bildung des innenumfangsseitigen Ringspalts (35) aneinander angreifen.

4. Bremsdruckgeber nach Anspruch 1, dadurch gekennzeichnet, daß der Kolben (32) mit einer in diesem gelagerten Rolle (46) unter der Kraftwirkung einer im Druckraum (36) angeordneten Druckfeder (48) am Nocken (28) abgestützt ist.

5. Bremsdruckgeber nach Anspruch 1, dadurch gekennzeichnet, daß das Getriebe (19) ein die Drehzahl des Elektromotors (15) untersetzendes Stirnrädergetriebe, insbesondere ein Planetengetriebe (17) ist.

6. Bremsdruckgeber nach Anspruch 1, dadurch gekennzeichnet, daß eine elektromagnetische Bremse (16) zum Halten der Ankerwelle (20) vorgesehen ist.

## Claims

1. Brake-pressure transmitter (10) for a hydraulic brake system for motor vehicles, having
- a cylinder housing (31) in which a longitudinally displaceable piston (32) having a sealing collar (44) at the circumference is accommodated,
- a pressure space (36) which can be varied in volume by longitudinal displacement of the piston (32) and is in fluidic connection with at least one wheel-brake cylinder (40) on the one hand and with a pressure-medium reservoir (38) on the other hand, in which arrangement the last-mentioned connection can be separated from the pressure space (36) by the sealing collar (44) crossing said connection,
- an electric motor (15) for the drive of the piston (32),
- and a gear unit (19) for the conversion of the rotary motion of the electric motor (15) into a linear motion of the piston (32),
characterized by the further features,
- the connection between the pressure space (36) and the pressure-medium reservoir (38) is formed by an annular gap (35) lying in the cylinder wall,
- a cam (28), which acts remotely from the pressure space at least indirectly on the piston (32), is provided on the output side of the gear unit (19),
- the cam (28) has a larger rise in the path region (51) which serves for the crossing of the annular gap (35) than in the following region which serves to discharge pressure medium into the wheel-brake cylinder (40).

2. Brake-pressure transmitter according to Claim 1, characterized in that the cam (28) has a spiral outline.

3. Brake-pressure transmitter according to Claim 1, characterized in that the cylinder wall consists of two parts (33, 34), which act upon one another while forming the annular gap (35) at the inner circumference.

4. Brake-pressure transmitter according to Claim 1, characterized in that the piston (32), by means of a roller (46) which is mounted in it, is supported on the cam (28) under the action of force of a compression spring (48) arranged in the pressure space (36).

5. Brake-pressure transmitter according to Claim 1, characterized in that the gear unit (19) is a spur-gear unit, in particular a planetary gear unit, which reduces the rotational speed of the electric motor (15).

6. Brake-pressure transmitter according to Claim 1, characterized in that an electromagnetic brake (16) is provided for stopping the armature shaft (20).

## Revendications

1. Générateur de pression de frein (10) pour une installation de frein hydraulique de véhicule automobile comprenant :
- un corps de cylindre (31) logeant de manière coulissante un piston (32) avec un manchon d'étanchéité (44) à sa périphérie,
- une chambre de pression (36) de volume variable délimitée par le piston (32) coulissant longitudinalement, cette chambre étant reliée par une liaison de transmission de liquide, d'une part, avec au moins un cylindre de frein de roue (40) et, d'autre part, avec un réservoir d'alimentation en fluide sous pression (38), cette liaison étant coupée de la chambre de pression (36) par le passage du manchon d'étanchéité (44),
- un moteur électrique (15) pour entraîner le piston (32),
- ainsi qu'une transmission (19) pour convertir le mouvement de rotation du moteur électrique (15) en un mouvement linéaire du piston (32),
caractérisé par les caractéristiques suivantes :
- la liaison entre la chambre de pression (36) et le réservoir d'alimentation en fluide sous pression (38) est réalisée par un intervalle annulaire (35) dans la paroi du cylindre,
- une came (28) du côté de la sortie de la transmission (19), cette came agissant au moins indirectement sur le piston (32) du côté opposé à la chambre de pression,
- la came (28) présente, dans la zone de chemin (51) servant au passage de l'intervalle annulaire (35), une pente plus grande que dans la zone suivante, servant à expulser le moyen de pression vers les cylindres de frein de roue (40).

2. Générateur de pression de frein selon la revendication 1,
caractérisé en ce que
la came (28) a un contour en forme de spirale.

3. Générateur de pression de freinage selon la revendication 1,
caractérisé en ce que
la paroi du cylindre est formée de deux parties (33, 34) reliées en formant un intervalle annulaire (35) du côté de la périphérie intérieure.

4. Générateur de pression de freinage selon la revendication 1,
caractérisé en ce que
le piston (32) s'appuie contre la came (28) par un galet (46) qu'il porte sous l'effet de la force d'un ressort de compression (48) logé dans la chambre de pression (36).

5. Générateur de pression de freinage selon la revendication 1,
caractérisé en ce que
la transmission (19) est une transmission à roue droite démultipliant la vitesse de rotation du moteur électrique (15), notamment une transmission planétaire (17).

6. Générateur de pression de freinage selon la revendication 1,
caractérisé par
un frein électromagnétique (16) pour retenir l'arbre d'induit (20).
